# EUROPÄISCHE PATENTSCHRIFT

(11) **EP 2 794 220 B1**
(45) Veröffentlichungstag und Bekanntmachung des Hinweises auf die Patenterteilung: **09.05.2018**
(21) Anmeldenummer: 12794735.6
(22) Anmeldetag: 04.12.2012
(51) Int. Cl.: B29B 15/12

(54) **VERFAHREN ZUR HERSTELLUNG EINES FASERVERBUNDWERKSTOFFES SOWIE EINE VORRICHTUNG ZUR DURCHFÜHRUNG DES VERFAHRENS**
METHOD FOR PRODUCING A FIBRE COMPOSITE MATERIAL AND A DEVICE FOR CARRYING OUT THE METHOD
PROCÉDÉ DE PRODUCTION D'UN MATÉRIAU COMPOSITE RENFORCÉ PAR DES FIBRES ET DISPOSITIF POUR LA MISE EN OEUVRE DE CE PROCÉDÉ

(30) Priorität: 20.12.2011 DE 102011056686
(43) Veröffentlichungstag der Anmeldung: 29.10.2014
(73) Patentinhaber: Brzeski, Markus, 67655 Kaiserslauten (DE)
(72) Erfinder: Brzeski, Markus, 67655 Kaiserslauten (DE)
(74) Vertreter: Schweiger, Johannes
(86) Internationale Anmeldenummer: PCT/EP2012/074371
(87) Internationale Veröffentlichungsnummer: WO 2013/092203

(56) Entgegenhaltungen:
- EP-A2- 0 389 798
- WO-A1-02/30657

## Beschreibung

Die Erfindung betrifft ein Verfahren zur Herstellung eines Faserverbundwerkstoffes, sowie eine Vorrichtung zur Durchführung des Verfahrens.
Konkret betrifft die Anmeldung ein Verfahren zur Herstellung eines Faserverbundwerkstoffes in Form eines Faser-Kunststoff-Verbundwerkstoffes (FKV), sowie eine Vorrichtung zur Herstellung eines Faserverbundwerkstoffes in Form eines Faser-Kunststoff-Verbundwerkstoffes. Ein Faserverbundwerkstoff in Form eines Faser-Kunststoff-Verbundwerkstoffes besteht aus Verstärkungsfasern, die in eine Kunststoffmatrix eingelagert sind.
Zur Herstellung eines solchen Faserverbundwerkstoffes werden zunächst Fasern und ein Polymer, insbesondere ein Thermoplast oder ein Duroplast, in einem Zustand möglichst geringer Viskosität zusammengeführt. Um ein Polymer in Form eines Thermoplasten in einen Zustand einer möglichst geringen Viskosität zu überführen, kann der Thermoplast insbesondere erschmolzene werden. Die Fasern werden durch das erschmolzene Polymer imprägniert. Während der Imprägnierung werden die Fasern mit Druck beaufschlagt, des Verbund aus Fasern und Polymer zu verfestigen und insbesondere auch, um eine weitgehende oder vollständige Imprägnierung der Fasern erreichen zu können. Diese Verfestigung und weitgehende oder vollständige Imprägnierung des Verbundes aus Fasern und Polymer, die allgemein auch als Konsolidierung des Verbundes aus Fasern und Polymer bezeichnet wird, kann regelmäßig allein durch separate Verfahrensschritte erreicht werden. Nach Abschluss der Konsolidierung des Verbundes aus Fasern und Polymer lässt man das Polymer erhärten. Nachdem das Polymer erhärtet ist, bildet dieses eine Kunststoffmatrix, in die die Fasern eingebettet sind und als Verstärkungsfasern für den Kunststoff wirken.

Entsprechend ausgebildete Faserverbundwerkstoffe werden heutzutage in zahlreichen Bereichen angewendet, beispielsweise in der Automobilindustrie oder in der Luft- und Raumfahrttechnik.

Eines der Hauptprobleme bei der Herstellung von Faserverbundwerkstoffen in Form von Faser-Kunststoff-Verbundwerkstoffen ist die Viskosität des Polymers, insbesondere so weit zur Herstellung eines solchen Verbundes ein Polymer in Form eines Thermoplasten Verwendung findet. Denn thermoplastische Polymere weisen oberhalb ihres Schmelzpunktes und amorphe Polymere weisen oberhalb ihres Erweichungspunktes (nachfolgend ebenfalls als "Schmelzpunkt." bezeichnet) regelmäßig noch eine hohe Viskosität auf, so dass zur vollständigen Imprägnierung der Fasern und zur Konsolidierung des Faser-Kunststoff-Verbundes häufig eine erhebliche Zeit benötigt wird. Zwar könnte das thermoplastische Polymer weit über seinen Schmelzpunkt erhitzt und dessen Viskosität damit gesenkt werden. Bei diesen Temperaturen zersetzen sich thermoplastische Polymere jedoch verhältnismäßig schnell, so dass thermoplastische Polymere bei der Imprägnierung der Fasern regelmäßig nicht deutlich über ihren Schmelzpunkt erhitzt werden können. Insofern wird regelmäßig eine erhebliche Zeit benötigt, bis der Faser-Kunststoff-Verbund ausreichend imprägniert und dessen Konsolidierung beendet ist. Dieser für eine gute Konsolidierung des Faser-Kunststoff-Verbundes benötigten Zeit stehen die in der Industrie gewünschten hohen Prozessgeschwindigkeiten gegenüber. Würde man die Dauer, in der das erschmolzene thermoplastische Polymer die Fasern imprägniert, jedoch verringern, um hierdurch den Erfordernissen einer hohen Prozessgeschwindigkeit zu genügen, würde hierunter die Konsolidierung des Faser-Kunststoff-Verbundes und damit die Qualität des erstellten Faserverbundwerkstoffes leiden. Dieser Konflikt zwischen einer für eine vollständige Imprägnierung und Konsolidierung des Faser-Kunststoff-Verbundes einerseits benötigten Zeit und der gewünschten hohen Prozessgeschwindigkeiten andererseits wird häufig auch als das "Geschwindigkeits-Qualitäts-Dilemma" bei der Herstellung von Faserverbundwerkstoffen bezeichnet.

Auf Grund des Geschwindigkeits-Qualitäts-Dilemmas werden Faserverbundwerkstoffe heutzutage regelmäßig in zwei Schritten hergestellt. In einem ersten Schritt werden Halbzeug aus einem konsolidierten Faser-Kunststoff-Verbund hergestellt, die in Form flächiger Halbzeuge auch als Organobleche bezeichnet werden. In einem zweiten Schritt wird aus den Halbzeugen anschließend durch Thermoformen das fertige Produkt hergestellt, wobei das Halbzeug wieder bis über den Schmelzpunkt des Polymers erhitzt und anschließend geformt wird, bevor man es erkalten lässt. Nachteilig an einer solchen Herstellung von Faserverbundwerkstoffen in zwei Schritten ist jedoch, dass diese Herstellung keinen kontinuierlichen Produktionsprozess erlaubt. Ferner ist ein solches Vorgehen energetisch nachteilig, da das Polymer sowohl zur Herstellung des Halbzeuges als auch zur Herstellung des fertigen Produktes bis über seinen Schmelzpunkt erwärmt werden muss.

Es wäre daher von Vorteil, wenn eine Technologie zur Verfügung stünde, durch die Fasern in einem Faser-Polymer-Verbund schneller durch das Polymer imprägniert und der Faserverbundwerkstoff daher schneller vollständig konsolidiert werden könnte.

WO 02/30657 A1 offenbart ein Verfahren zur Herstellung eines Verbundwerkstoffes, bei welchem die Matrix elektrisch leitfähige Fasern enthält und die Matrix mittels Durchleiten eines elektrischen Stromes durch die Fasern erhitzt wird.

Der vorliegenden Erfindung liegt die Aufgabe zu Grunde, ein Verfahren zur Herstellung eines Faserverbundwerkstoffes, insbesondere eines Faser-Kunststoff-Verbundwerkstoffes aus Fasern und einem Polymer, insbesondere einem thermoplastischen Polymer, zur Verfügung zu stellen, durch welches eine Imprägnierung der Fasern mit dem Polymer und damit eine Konsolidierung des Faser-Kunststoff-Verbundes schneller erreicht werden kann als durch die aus dem Stand der Technik bekannten Verfahren.

Zur Lösung dieser Aufgabe wird erfindungsgemäß zur Verfügung gestellt, ein Verfahren zur Herstellung eines Faserverbundwerkstoffes, das die folgenden Verfahrensschritte umfasst:
Zusammenführen von Fasern und Polymer;
Beaufschlagen der Fasern mit thermischer Energie, wobei die Fasern durch das Energiebeaufschlagen bis auf eine Temperatur erhitzt werden, die über der Temperatur des Polymers liegt und die Temperatur, bis auf die die Fasern erhitzt werden, über der Schmelztemperatur des Polymers liegt; Weiterverarbeiten der mit Energie beaufschlagten Fasern und des Polymers zu einem Faserverbundwerkstoff.

Das erfindungsgemäße Verfahren geht demnach von den aus dem Stand der Technik bekannten Verfahren zur Herstellung von Faserverbundwerkstoffen aus, bei denen Fasern und ein Polymer zunächst zusammengeführt und anschließend mit Energie beaufschlagt werden, um das Polymer zur Imprägnierung der Fasern über seine Schmelztemperatur zur erhitzen.

Beim Schritt des Energiebeaufschlagens wird im Stand der Technik bisher jedoch die Gesamtheit aus Fasern und Polymer in gleicher Weise mit Energie beaufschlagt. Erfindungsgemäß ist nunmehr jedoch vorgesehen, dass die Fasern und das Polymer nicht in gleicher Weise, sondern gezielt die Fasern mit Energie beaufschlagt werden. Erfindungsgemäß werden die Fasern dabei durch das Energiebeaufschlagen bis auf eine Temperatur erhitzt, die über der Temperatur des Polymers liegt. Ferner ist vorgesehen, dass die Temperatur, bis auf die die Fasern durch das Energiebeaufschlagen erhitzt werden, über der Schmelztemperatur des Polymers liegt. Die derart erhitzten Fasern geben ihre thermische Energie beziehungsweise Wärme an die Umgebung und damit auch an das sie umgebende Polymer ab. Da die Temperatur der Faser jedoch über der Schmelztemperatur des Polymers liegt, führt die Abgabe der Wärme von den Fasern an das Polymer zu einem Schmelzen des die Faser umgebenden Polymers.

Erfindungsgemäß wird das Polymer demnach nicht oder zumindest überwiegend nicht direkt durch ein Beaufschlagen der Fasern und des Polymer mit Energie erschmolzen, sondern ganz oder im wesentlichen indirekt über die durch das Energiebeaufschlagen erhitzten Fasern, die die Wärme derart an das sie umgebende Polymer abgeben, dass dieses schmilzt beziehungsweise anschmilzt. Erfindungsgemäß wurde überraschenderweise festgestellt, dass eine solch indirekte Erhitzung des Polymers über die Fasern einen Ausweg aus dem "Geschwindigkeits-Qualitäts-Dilemma" öffnet. Denn überraschenderweise wurde festgestellt, dass die Erhitzung und Erschmelzung des Polymers über die Fasern sehr schnell zu einer sehr guten Imprägnierung der Faser mit dem Polymer führt und daher eine sehr schnelle und gute Konsolidierung des Verbundes aus zusammengeführten Fasern und Polymer (der nachfolgend auch als Faser-Polymer-Verbund bezeichnet wird) erreicht werden kann. Dies schafft insbesondere auch die Möglichkeit, die Imprägnierung und Konsolidierung des Faser-Polymer-Verbundes in einer solch kurzen Zeit durchzuführen, die unterhalb der Zeit liegt, in der sich das Polymer zersetzt. Dabei kann das Polymer durch die Fasern auch auf eine Temperatur erhitzt werden, die deutlich über der Schmelztemperatur des Polymers liegt, ohne sich zu zersetzen.

Damit ermöglicht es das erfindungsgemäße Verfahren, einen Faserverbundwerkstoff aus Fasern und Polymer in einem kontinuierlichen Verfahren mit hohen Prozessgeschwindigkeiten und in guter Qualität herzustellen.

Weshalb die Zersetzung des Polymers gehemmt oder auch gänzlich unterdrückt wird, wenn das Polymer bei der Durchführung des erfindungsgemäßen Verfahrens bis auf Temperaturen erhitzt wird, die über der Schmelztemperatur des Polymers liegen, ist noch nicht vollständig geklärt. Möglicherweise liegt dies daran, dass das Polymer die Freiräume zwischen den Fasern schnell ausfüllt, wenn es über die Fasern erhitzt wird, wodurch der Sauerstoff aus den Freiräumen zwischen den Fasern und damit aus dem Faser-Polymer-Verbund schnell verdrängt wird. Der für die Zersetzung des Polymers im Faser-Polymer-Verbund notwendige Sauerstoff steht anschließend nicht mehr zur Verfügung, so dass die Zersetzung des Polymers gehemmt ist.

Damit ist es möglich, das erfindungsgemäße Verfahren derart durchzuführen, dass das Polymer durch das Energiebeaufschlagen nicht zersetzt wird. Dies gilt insbesondere auch dann, wenn das Polymer durch die Abgabe der thermischen Energie von den Fasern auf das Polymer stark über seine Schmelztemperatur erhitzt wird.

Zum Zusammenführen der Fasern und des Polymers kann grundsätzlich jedes aus dem Stand der Technik bekannte Mittel und Verfahren aus der Technologie der Herstellung von Faserverbundwerkstoffen angewandt werden, durch welches Fasern und Polymer zusammengeführt werden können. Das Polymer kann beispielsweise in Form von Granulat auf die Fasern aufgegeben werden, in gelöster oder dispergierter Form auf die Fasern aufgesprüht oder aufgetragen werden oder als Folie mit den Fasern zusammengeführt werden.

Nach eine Ausführungsform ist vorgesehen, dass das Polymer in Form von Polymerfasern vorliegt, die den Fasern zugeführt werden. Nach einer Fortbildung dieses Erfindungsgedankens ist vorgesehen, dass die zusammengeführten Polymerfasern und die Fasern als Mischgarn, als Gewebe oder als Vlies vorliegen.

Die Fasern können in loser Form, beispielsweise als Wirrfasern vorliegen, wenn sie mit dem Polymer zusammengeführt werden.

Besonders bevorzugt werden jedoch Fasern in Form von Endlosfasern mit dem Polymer zusammengeführt, wobei die Endlosfasern beim Zusammenführen mit dem Polymer bevorzugt orientiert beziehungsweise ausgerichtet sind.

Besonders bevorzugt werden Fasern in Form von Faserhalbzeugen mit dem Polymer zusammengeführt. Als Faserhalbzeug können die Fasern beispielsweise in Form von Faserbündeln (Rovings), Fasergeweben, Fasermatten, Faservliesen, Fasergesticken, Fasergeflechten oder Fasergelegen vorlieben.

Die Fasern können beispielsweise eine Dicke im Bereich von 4 bis 20 µm aufweisen und beispielsweise eine Länge aufweisen, die im Fall von Endlosfasern von wenigen Zentimetern bis zu mehreren Kilometern reichen kann.

Die Fasern sollten derart ausgebildet sein, dass sie sich bei einer Temperatur zersetzen oder schmelzen, die über der Temperatur liegt, bei der sich das Polymer zersetzt. Da bevorzugt ein Polymer in Form eines Thermoplasten eingesetzt wird, der sich in der Regel schon bei verhältnismäßig niedrigen Temperaturen zersetzt, können erfindungsgemäß bevorzugt Fasern aus Aramid, Glas, Keramik oder Kohlenstoff eingesetzt werden.

Fasern aus Naturstoffen, wie beispielsweise Hanf, oder aus Polyamid, die im Stand der Technik regelmäßig als Fasern für Faserverbundwerkstoffe verwendet werden, sind für die Anwendung des erfindungsgemäßen Verfahrens weniger geeignet, da sich diese häufig schon bei Temperaturen zersetzen, die nicht oder nicht wesentlich über der Zersetzungstemperatur thermoplastischer Polymere liegt.

Soweit für das erfindungsgemäße Verfahren ein Polymer in Form eines Thermoplasten eingesetzt wird, kann bevorzugt ein Polymer in Form von Polyphenylensulfid (PPS), Polyetheretherketon (PEEK) oder sonstigen Polyetherketonen, beispielsweise PEKK, Polyamid (PA), Polyetherimid (PEI), Polyoxymethylen (POM) oder Polyethylenterephtalat (PET) eingesetzt werden.

Das Polymer kann durch das Beaufschlagen des Faser-Polymer-Verbundes mit Energie beziehungsweise durch die Abgabe von Wärme der mittels des Beaufschlagen mit Energie erhitzten Fasern auf das Polymer auf eine Temperatur erhitzt werden, die über der Schmelztemperatur des Polymers liegt, insbesondere auch auf eine Temperatur, die wenigstens 10 %, wenigstens 30 % oder auch wenigstens 50 % über der Schmelztemperatur des Polymers liegt (wobei die Schmelztemperatur des Polymers in °C als 100 % definiert ist). Liegt die Schmelztemperatur des Polymers demnach beispielsweise bei 340°C, wird das Polymer auf 374°C erhitzt, wenn dies durch die Abgabe von Wärme der erhitzten Fasern auf eine Temperatur erhitzt wird, die 10 % über der Schmelztemperatur des Polymers liegt. Ferner kann vorgesehen sein, dass das Polymer durch die Wärmeabgabe der mittels des Beaufschlagens mit Energie erhitzten Fasern auf eine Temperatur erhitzt wird, die höchstens 90 % über der Schmelztemperatur des Polymers liegt, also beispielsweise auch höchstens 70 % oder höchstens 60 % über der Schmelztemperatur des Polymers. Hierdurch kann eine Zersetzung des Polymer verhindert werden.

Erfindungsgemäß kann insbesondere vorgesehen sein, dass die Fasern durch das Beaufschlagen mit Energie bis auf eine Temperatur erhitzt werden, die wenigstens 20 % über der Schmelztemperatur des Polymers liegt, also beispielsweise auch wenigstens 40 %, 60 %, 80 % oder wenigstens auch 100 % über der Schmelztemperatur des Polymers (wobei die Schmelztemperatur des Polymers in °C wiederum als 100 % definiert ist). Erfindungsgemäß wurde festgestellt, dass eine gute Imprägnierung und schnelle Konsolidierung des Faser-Polymer-Verbundes erreicht werden kann, wenn die Fasern auf eine Temperatur erhitzt werden, die mindestens 20 % über der Schmelztemperatur des Polymers liegt. Ferner wurde erfindungsgemäß festgestellt, dass es vorteilhaft sein kann, die Temperatur, bis auf die die Fasern durch das Beaufschlagen mit Energie erhitzt werden, höchstens 150 % über der Schmelztemperatur des Polymers liegt, da es ansonsten zu einem beschleunigten Zersetzen des Polymers kommen kann. Demnach kann die Temperatur, bis auf die die Fasern durch das Beaufschlagen mit Energie erhitzt werden, beispielsweise auch höchstens 120 %, 100%, 80 % oder höchstens 60 % über der Schmelztemperatur des Polymers liegen.

Erfindungsgemäß kann vorgesehen sein, dass die Fasern vor dem Zusammenführen mit dem Polymer mit Energie beaufschlagt werden, nach dem Zusammenführen mit dem Polymer mit Energie beaufschlagt werden oder sowohl vor als auch nach dem Zusammenführen mit dem Polymer mit Energie beaufschlagt werden.

Der Vorteil des Energiebeaufschlagens der Fasern mit Energie vor deren Zusammenführung mit dem Polymer besteht zum einen darin, dass das Polymer hierbei nicht unmittelbar mit Energie beaufschlagt wird. Vielmehr wird das Polymer allein indirekt durch die durch das Energiebeaufschlagen erhitzten die Fasern erhitzt, die ihre Wärme nach dem Zusammenführen mit dem Polymer an das sie dann umgebende Polymer abgeben. Diese Ausführungsform der Erfindung kann beispielsweise bei empfindlichen Polymeren angewandt werden, da diese bei dieser Ausführungsform nur indirekt über die Fasern und damit sehr schonend erhitzt werden. Da die durch das Energiebeaufschlagen erhitzten Fasern ihre Wärme-insbesondere auch aufgrund ihres geringen Durchmessers - in der Regel sehr schnell abgeben, kann vorgesehen sein, dass die vor dem Zusammenführen mit dem Polymer mit Energie beaufschlagten Fasern unmittelbar nach der Beendigung des Beaufschlagens der Fasern mit Energie mit dem Polymer zusammengeführt werden. Es kann beispielsweise vorgesehen sein, dass die Fasern und das Polymer weniger als 1 Sekunde nach Beendigung des Beaufschlagens der Fasern mit Energie mit dem Polymer zusammengeführt werden, also beispielsweise auch weniger als 0,5 oder 0,2 Sekunden danach.

Erfindungsgemäß kann vorgesehen sein, dass die Fasern ausschließlich nach dem Zusammenführen mit dem Polymer mit Energie beaufschlagt werden. Bei dieser Ausführungsform wird demnach der Faser-Polymer-Verbund mit Energie beaufschlagt. Da die Wärme sehr schnell von den Fasern an das Polymer abgebbar ist, wodurch ein sehr schnelles Erschmelzen und damit Imprägnieren der Faser mit dem Polymer sowie eine sehr schnelle Konsolidierung des Faser-Polymer-Verbundes erreicht werden kann, kann es ausreichend sein, dass der Faser-Polymer-Verbund nur sehr kurz mit Energie beaufschlagt wird. Beispielsweise kann es ausreichend sein, den Faser-Polymer-Verbund kürzer als 1 Sekunde mit Energie zu beaufschlagen. Bevorzugt wird der Faser-Polymer-Verbund für einen Zeitraum unter 1 Sekunde mit Energie beaufschlagt, da hierdurch eine Zersetzung des Polymers zuverlässig unterdrückt werden kann. Erfindungsgemäß kann insbesondere vorgesehen sein, dass die zusammengeführten Fasern und das Polymer für nicht mehr als 0,8 Sekunden, also beispielsweise auch für nicht mehr als 0,6 Sekunden, 0,4 Sekunden oder auch für nicht mehr als 0,1 Sekunden mit Energie beaufschlagt werden. Um eine ausreichende Erhitzung der Fasern zu erreichen, kann ferner vorgesehen sein, die zusammengeführten Fasern und das Polymer nicht kürzer als 0,002 Sekunden zu erhitzen, also Beispielsweise auch nicht kürzer als 0,01 Sekunden, 0,02 Sekunden oder nicht kürzer als 0,05 Sekunden. Mit anderen Worten: Jeder Bereich des Faser-Polymer-Verbundes, in dem die Fasern durch das Polymer imprägniert werden sollen, wird für die vorgenannten Zeiträume erfindungsgemäß mit Energie beaufschlagt.

Soweit erfindungsgemäß vorgesehen ist, dass die Fasern sowohl vor als auch nach dem Zusammenführen mit dem Polymer mit Energie beaufschlagt werden, werden zunächst allein die Fasern und anschließend der Faser-Polymer-Verbund mit Energie beaufschlagt. Der Vorteil dieser Ausführungsform besteht unter anderem darin, dass die Fasern bei dieser Ausführungsform kontinuierlich mit Energie beaufschlagt werden und ein zu starkes Abkühlen der Fasern, nachdem sie mit dem Polymer zusammengeführt worden sind, verhindert werden kann. Ein weiterer Vorteil dieser Ausführungsform besteht darin, dass das Polymer leichter mit den Fasern zusammengeführt werden kann und einen Verbund mit den Fasern bildet, wenn die Fasern vor dem Zusammenführen mit dem Polymer bereits durch das Energiebeaufschlagen erhitzt sind. Denn in diesem Fall schmilzt das Polymer beim Zusammenführen mit den erhitzten Fasern unmittelbar an und kann dadurch besser an den Fasern haften als an nicht erhitzten Fasern.

Bevorzugt wird das erfindungsgemäße Verfahren als kontinuierliches Verfahren durchgeführt. Insofern können beispielsweise die Fasern und das Polymer bei Durchführung des Verfahrens kontinuierlich geführt werden.

Insbesondere kann vorgesehen sein, dass die Fasern beziehungsweise der Verbund aus zusammengeführten Fasern und Polymer kontinuierlich mit Energie beaufschlagt wird. Beispielsweise können die Fasern beziehungsweise der Faser-Polymer-Verbund kontinuierlich an einer Einrichtung zur Beaufschlagung der Fasern beziehungsweise des Faser-Polymer-Verbundes mit Energie vorbeigeführt werden. Um die Fasern beziehungsweise den Faser-Polymer-Verbund kontinuierlich an einer solchen Einrichtung vorbeizuführen, kann auf die aus dem Stand der Technik bekannten Mittel bei der Herstellung und Verarbeitung von Faserverbundwerkstoffen zurückgegriffen werden, durch die Fasern oder ein Faser-Polymer-Verbund geführt werden können, also beispielsweise Bänder, Walzen oder Rollen, auf denen oder durch die der Verbund transportiert werden kann.
Die Energie, mit der die Fasern beziehungsweise der Faser-Polymer-Verbund beaufschlagt werden, ist thermische Energie. Entsprechend kann die Einrichtung, durch die der Faser-Polymer-Verbund mit Energie beaufschlagt werden kann, insbesondere eine Einrichtung zur Übertragung beziehungsweise Abgabe von thermischer Energie, also Wärme sein. Zur Beaufschlagung der Fasern beziehungsweise des Faser-Polymer-Verbundes mit thermischer Energie beziehungsweise Wärme kann diese insbesondere mittels Konvektion oder Strahlung auf die Fasern beziehungsweise den Faser-Polymer-Verbund übertragen werden. Zur Beaufschlagung der Fasern beziehungsweise des Faser-Polymer-Verbundes mit Energie können die Fasern beziehungsweise der Faser-Polymer-Verbund beispielsweise mit Infrarot-Strahlung, Laser, Flammen oder Anblasen mit heißem Gas oder Dampf beaufschlagt werden. Aus dem Stand der Technik sind dem Fachmann Mittel bekannt, durch die ein Faser-Polymer-Verbund entsprechend mit Energie beaufschlagt werden kann, und auf die der Fachmann zur Durchführung des erfindungsgemäßen Verfahrens und bei der Konfektionierung der erfindungsgemäßen Vorrichtung zur Durchführung des Verfahrens zurückgreifen kann.
Um die Fasern nach dem Zusammenführen mit dem Polymer in dem Faser-Polymer-Verbund erfindungsgemäß gezielt mit Energie zu beaufschlagen und hierdurch stärker zu erhitzen als das Polymer, stehen dem Fachmann zahlreiche Möglichkeiten zur Verfügung. Beispielsweise können die Fasern und das Polymer derart zusammengeführt werden, dass die Fasern aufgrund ihrer geometrischen Anordnung in Verbund gezielt mit Energie beaufschlagt werden können, also insbesondere der Einrichtung zur Energiebeaufschlagung gezielt ausgesetzt werden können. Beispielsweise kann vorgesehen sein, dass die Fasern und das Polymer derart zusammengeführt werden, dass diese eine Schichtenfolge bilden. Dabei wird zumindest eine außen liegende Schicht von den Fasern gebildet, die anschließend gezielt mit Energie beaufschlagt werden können. Die eine oder mehreren außen liegenden Schichten aus Fasern können beispielsweise gezielt durch Infrarot-Strahlung, Laser, offene Flammen oder Anblasen mit heißen Gas oder Dampf erhitzt werden, wobei das Polymer auf der der Energiebeaufschlagung abgewandten Seite der Fasern angeordnet ist und hierdurch in geringerem Ausmaß als die Fasern mit Energie beaufschlagt wird.
Nach einem weiteren Ausführungsbeispiel kann vorgesehen sein, dass in dem Faser-Polymer-Verbund gezielt nur die Fasern durch Beaufschlagen des Verbundes mit Energie in Form von Strahlung angeregt werden.

Schließlich kann nach einem weiteren Ausführungsbeispiel beispielsweise vorgesehen sein, dass die Fasern thermische Energie in Form von Wärmestrahlung, mit denen der Faser-Polymer-Verbund beaufschlagt wird, stärker absorbieren als das Polymer. Beispielsweise kann das Polymer aus einem transparenten, beispielsweise einem transmittierenden Material bestehen, durch das die Wärmestrahlung zu den Fasern transmittiert wird, die die Wärmestrahlen absorbieren und sich hierdurch erhitzen.

Erfindungsgemäß ist bevorzugt vorgesehen, dass durch das erfindungsgemäße Verfahren sämtliche Fasern durch das Energiebeaufschlagen bis auf eine Temperatur erhitzt werden, die über der Temperatur des Polymers und insbesondere auch über der Schmelztemperatur des Polymers liegt. Es kann jedoch auch ausreichend sein, wenn die Fasern allein weitgehend entsprechend erhitzt werden.

Erfindungsgemäß kann insbesondere vorgesehen sein, dass das Polymer vollständig oder zumindest weitgehend durch die Wärmeabgabe der erhitzten Fasern erschmolzen wird. Bevorzugt lässt man das Polymer wenigstens für einen Zeitraum erschmolzen, bis dieses die Fasern vollständig oder zumindest weitgehend imprägniert hat. Um das Polymer vollständig oder zumindest weitgehend durch die Wärmeabgabe der erhitzten Fasern zu erschmelzen, kann es ausreichend sein, den Faser-Polymer-Verbund nur für einen Teil des Zeitraums, in dem das Polymer durch die Wärmeabgabe der erhitzten Fasern erschmolzen wird, erfindungsgemäß mit Energie zu beaufschlagen. Denn aufgrund der Wärmekapazität der Fasern können diese auch weiterhin Wärme an das Polymer abgehen, nachdem der Faser-Polymer-Verbund nicht mehr mit Energie beaufschlagt wird.

Indem die Fasern erfindungsgemäß stärker erhitzt werden als das Polymer, kann eine Zersetzung des Polymers, wie vorstehend ausgeführt, gehemmt oder auch gänzlich unterdrückt werden. Um eine Zersetzung des Polymers stärker zu hemmen oder zu unterdrücken, kann erfindungsgemäß vorgesehen sein, dass der Faser-Polymer-Verbund, nachdem die Fasern mit Energie beaufschlagt worden sind, gekühlt wird.

Zur Kühlung des Faser-Polymer-Verbundes kann auf die aus dem Stand der Technik bekannten Mittel und Techniken zur Kühlung eines erhitzten Faser-Polymer-Verbundes zurückgegriffen werden. Insbesondere kann der Faser-Polymer-Verbund beispielsweise durch ein Anblasen mit kühlem Gas oder Dampf oder auch durch eine Kontaktkühlung an einer Oberfläche gekühlt werden.

Insbesondere kann erfindungsgemäß vorgesehen sein, dass der erhitzte Faser-polymer-Verbund durch nachgeschaltete Weiterverarbeitungsschritte gekühlt wird, beispielsweise bei der Konsolidierung des Faser-Polymer- Verbundes.

Um die Imprägnierung der Fasern mit dem geschmolzenen Polymer zu verbessern, können der Energiebeaufschlagung Verfahrensschritte und Mitteln zur Konsolidierung, also zur durchgehenden oder weitgehenden Imprägnierung der Faser mit dem Polymer, nachgeschaltet sein. Hierzu kann der mit Energie beaufschlagte, erhitzte Faser-Polymer-Verbund, wie aus dem Stand der Technik bekannt, beispielsweise mittels Walzen oder in einem Schlitz mit Einlaufspalt, einem sogenannten Gleitschuh, komprimiert und hierdurch konsolidiert werden.

Bei einer Konsolidierung des Faser-Polymer-Verbundes mittels Walzen wird der Faser-Polymer-Verbund im Walzenspalt gegenläufiger Walzen komprimiert und dabei konsolidiert.

Das Polymer beziehungsweise der Faser-Polymer-Verbund wird durch den Kontakt mit der Oberfläche der Walzen oder der Oberfläche des Gleitschuhs gekühlt.

Insbesondere, soweit die Fasern nach dem Zusammenführen mit dem Polymer mit Energie beaufschlagt werden, wird der Faser-Polymer-Verbund bevorzugt unmittelbar im Anschluss an die Beaufschlagung der Fasern mit Energie gekühlt, so dass eine Zersetzung des Polymers zuverlässig verhindert werden kann. Bevorzugt wird der Faser-Polymer-Verbund weniger als eine Sekunde, also beispielsweise auch weniger als 0,1 Sekunden, nachdem der Verbund mit Energie beaufschlagt worden ist, gekühlt.

Nachdem der Faser-Polymer-Verbund abgekühlt ist, ist das Polymer zu einem Kunststoff erhärtet, so dass ein Faserverbundwerkstoff in Form eines Faser-Kunststoff-Verbundwerkstoffes vorliegt.

Durch das erfindungsgemäße Verfahren sind grundsätzlich beliebige Faserverbundwerkstoffe aus Fasern und Polymer herstellbar, beispielsweise Halbzeuge, wie Organobleche, aber insbesondere auch fertige Produkte.

Gegenstand der vorliegenden Erfindung ist ferner ein Faserverbundwerkstoff, der nach dem hierin beschriebenen Verfahren hergestellt ist.

Ein nach dem erfindungsgemäßen Verfahren hergestellter Faserverbundwerkstoff zeichnet sich insbesondere durch eine sehr homogene Struktur aus, die im Wesentlichen frei von Poren oder Freiräumen zwischen den Fasern ist. Insbesondere zeichnet sich ein nach dem erfindungsgemäßen Verfahren hergestellter Faserverbundswerkstoff auch dadurch aus, dass dieser im Gegensatz zu nach dem Stand der Technik hergestellten Faserverbundwerkstoffen eine deutlich geringere Schichtung aufweist. Ein nach dem erfindungsgemäßen Verfahren hergestellter Faserverbundwerkstoff kann praktisch auch im Wesentlichen schichtungsfrei aufgebaut sein.

Gegenstand der vorliegenden Erfindung ist ferner eine Vorrichtung zur Durchführung des hierin beschriebenen Verfahrens. Die Vorrichtung und die Mittel der Vorrichtung sind insbesondere derart ausgebildet, dass durch diese die zur Durchführung des Verfahrens hierin beschriebenen Verfahrensschritte durchführbar sind.

Weitere Merkmale der Erfindung ergeben sich aus den nachfolgenden Figuren und der zugehörigen Figurenbeschreibung.

Sämtliche Merkmale des hierin beschriebenen Verfahrens sowie des danach hergestellten Faserverbundwerkstoffes können, einzeln oder in Kombination, beliebig miteinander kombiniert werden.

Die beigefügten Figuren zeigen in
- Figur 1: ein stark schematisiertes Ausführungsbeispiel einer erfindungsgemäßen Vorrichtung, auf der das erfindungsgemäße Verfahren durchgeführt wird,
- Figur 2: eine Aufsicht auf ein Schliffbild eines Faserverbundwerkstoffes, der gemäß einem Verfahren nach dem Stand der Technik hergestellt worden ist und
- Figur 3: eine Aufsicht auf ein Schliffbild eines Faserverbundwerkstoffes, der gemäß dem erfindungsgemäßen Verfahren hergestellt worden ist.

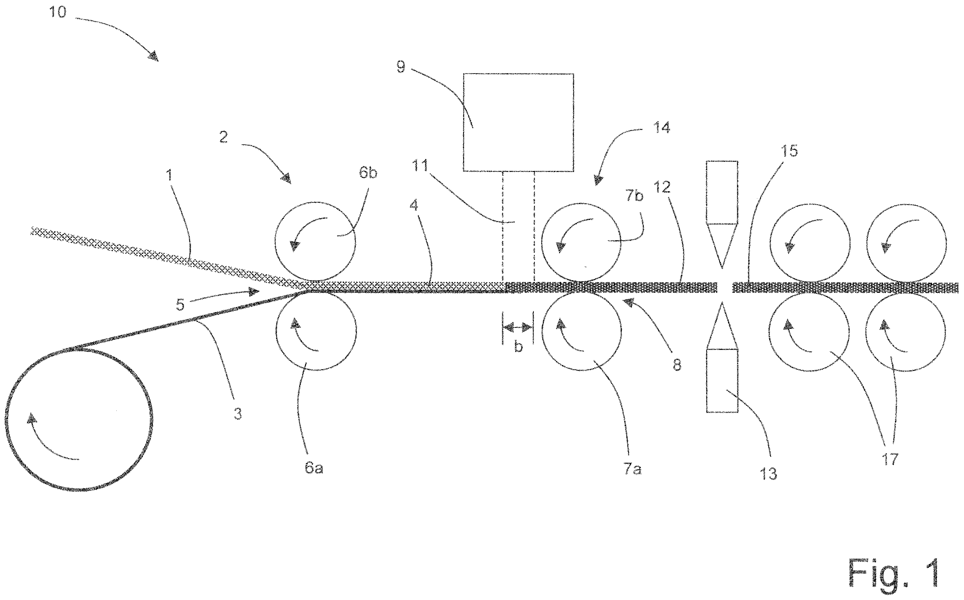

Gemäß dem in Figur 1 dargestellten Ausführungsbeispiel einer erfindungsgemäßen Vorrichtung 10 zur Durchführung eines Ausführungsbeispiels des erfindungsgemäßen Verfahrens werden Fasern 1 durch ein Mittel 2 mit einem Polymer 3 zu einem Faser-Polymer-Verbund 4 zusammengeführt. Die Fasern 1 liegen als Endlosfasern aus Kohlenstoff als Halbzeug in Form von Faserbündeln (Rovings) vor. Das Polymer 3 ist ein thermoplastisches Polymer in Form eine Folie aus Polyphenylensulfid. Die Fasern 1 haben einen Durchmesser von etwa 5 µm und eine Länge von mehreren Kilometern. Das Mittel 2 zur Zusammenführung der Fasern 1 und des Polymers 3 besteht aus einem paar gegenläufiger Walzen 6a, 6b, wobei die Fasern 1 und das Polymer 3 in den Walzenspalt 5 des Walzenpaares 6a, 6b eingeführt werden. Durch das Walzenpaar 6a, 6b und ein beabstandet hiervon angeordnetes Walzenpaar 7a. 7b wird der Faser-Polymer-Verbund 4 transportiert und dabei an einem Mittel 9, durch die der Faser-Polymer-Verbund 4 mit thermischer Energie beaufschlagbar ist, vorbeigeführt. Das in Figur 1 dargestellte Ausführungsbeispiel zeigt demnach eine Ausführungsvariante der Erfindung, bei der die Fasern 1 nach ihrem Zusammenführen mit dem Polymer 3 mit Energie beaufschlagt werden.

Bei dem Mittel 9 handelt es sich um einen Laser, durch den ein Laserstrahl 11 auf den Faser-Polymer-Verbund 4 gestrahlt werden kann. Durch Bestrahlung des Faser-Polymer-Verbundes 4 mittels des Laserstrahls 11 ist der Verbund 4 derart mit thermischer Energie beaufschlagbar, dass die Fasern 1 bis auf eine Temperatur erhitzt werden, die über der Temperatur des Polymers 3 und dessen Schmelztemperatur liegt. Da die Schmelztemperatur von Polyphenylensulfid bei 280°C liegt, sind die Fasern 1 durch den Laserstrahl 11 auf eine darüber liegende Temperatur erhitzbar. Im Ausführungsbeispiel werden die Fasern 1 etwa 50% über die Schmelztemperatur des Polymers 3 und damit auf etwa 420°C erhitzt. Der Laserstrahl 11 beaufschlagt den Faser-Polymer-Verbund 4 in einer Breite b von etwa 10 mm. Da der Faser-Polymer-Verbund 4 mit einer Bahngeschwindigkeit von etwa 6 Metern pro Minute am Laser 9 vorbeigeführt wird, ergibt sich hieraus ein Zeitraum, in dem jeder Bereich des Faser-Polymer-Verbundes 4 durch den Laserstrahl 11 mit thermischer Energie beaufschlagt wird, von etwa 0,1 Sekunden.

Der Laser 9 ist auf der Seite des Faser-Polymer-Verbundes 4 angeordnet, auf der die Fasern 1 angeordnet sind, so dass der Laserstrahl 11 insbesondere allein die Fasern 1 mit thermischer Energie beaufschlagt. Das Polymer 3 wird durch den Laserstrahl 11 nur geringfügig über seine Schmelztemperatur erhitzt, so dass das Polymer 3 im Wesentlichen dadurch erschmolzen wird, dass die Fasern 1 ihre durch die thermische Beaufschlagung mittels des Lasers 11 erhaltene Wärmeenergie an das Polymer 3 abgeben.

Das Polymer 3 wird durch die von den Fasern 1 abgegebene Wärme vollständig erschmolzen, imprägniert die Fasern 1 fast vollständig und füllt die Freiräume zwischen den Fasern 1 weitgehend aus.

Unmittelbar an den Abschnitt, in dem der Faser-Polymer-Verbund 4 mit dem Laserstrahl 11 beaufschlagt wird, schließt sich ein Mittel 14 zur Konsolidierung des mit dem Laserstrahl 11 beaufschlagten Faser-Polymer-Verbundes 4 an. Das Mittel 14 zur Durchführung dieses Konsolidierungsschrittes umfasst das Paar gegenläufigen Walzen 7a, 7b. Der Konsolidierungsschritt umfasst das Komprimieren des mit dem Laserstrahl 11 beaufschlagten Faser-Polymer-Verbundes 4 durch Kompression im Walzenspalt 8 des Walzenpaares 7a, 7b. Hierdurch wird die Imprägnierung der Fasern mit dem Polymer 3 weiter verbessert und der Faser-Polymer-Verbund 4 konsolidiert. Durch den Kontakt mit der Oberfläche des Walzenpaares 7 wird der Faser-Polymer-Verbund 4 gleichzeitig gekühlt, wobei insbesondere das Polymer 3 so stark abgekühlt wird, dass eine Zersetzung des Polymers 3 unterdrückt wird.

Nach der Konsolidierung des Faser-Polymer-Verbundes 4 durch Kompression im Walzenspalt 8 der Walzen 7a, 7b liegt ein Faserverbundwerkstoff 12 in Form eines Faser-Kunststoff-Verbundwerkstoffes vor.

Im Ausführungsbeispiel wird dieser Faserverbundwerkstoff 12 durch ein Schneidwerkzeug 13 geschnitten und anschließend als Organoblech 15, das durch Walzenpaare 17 weiter transportiert wird, für eine weitere Verarbeitung zur Verfügung gestellt.

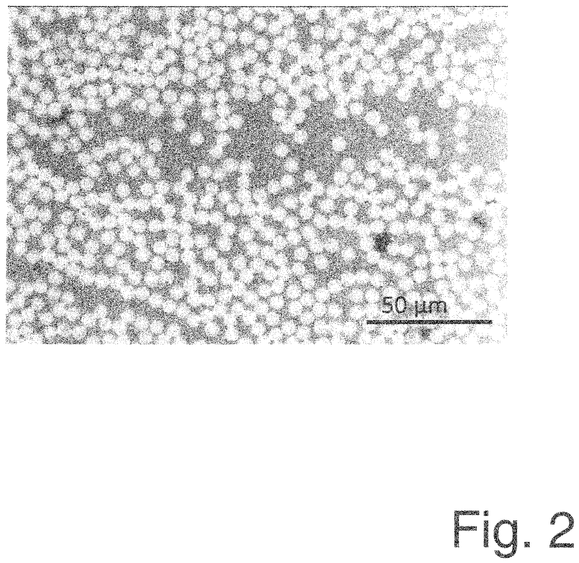

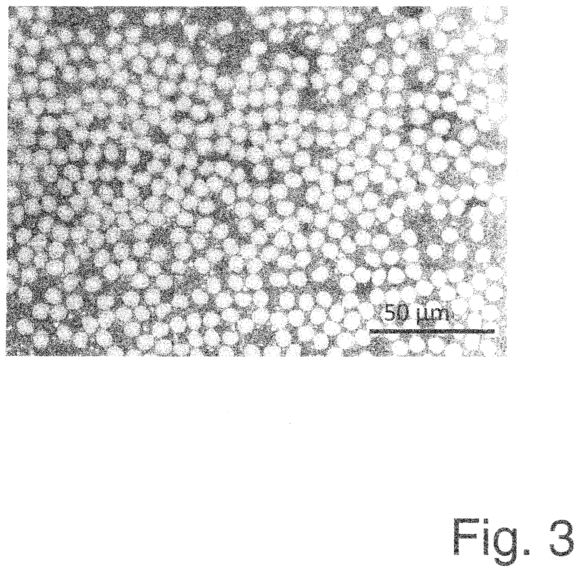

Die Figuren 2 und 3 zeigen jeweils eine Aufsicht auf Schliffbilder von Faserverbundwerkstoffen, wobei der Faserverbundwerkstoff gemäß Figur 2 nach dem Stand der Technik und der Faserverbundwerkstoff gemäß Figur 3 nach dem erfindungsgemäßen Verfahren hergestellt worden ist. Die Querschnitte durch die Fasern erscheinen als helle, kreisförmige Punkte, die in die dunkler erscheinende Kunststoffmatrix aus einem thermoplastischen Polymer eingelagert sind.

Das Schliffbild nach Figur 2 lässt deutlich eine ausgeprägte Schichtung erkennen, wobei in der Abbildung leicht oberhalb der Mitte ein Bereich ausgebildet ist, in dem kaum Fasern vorhanden sind und der weitgehend aus Kunststoff besteht. In diesem Bereich existieren beispielsweise Abschnitte in einer Fläche von etwa 2x2 oder auch 3x3 Faserdurchmessern, in denen keine Fasern vorhanden sind.

Demgegenüber lässt Figur 3 keinerlei Schichtung im Faserverbundwerkstoff erkennen. Vielmehr ist die Verteilung der Fasern in der Kunststoffmatrix sehr homogen und gleichmäßig. Es existieren keine Bereiche, die größer sind als 1x1 oder 1,5x1,5 Faserdurchmesser, in denen keine Fasern vorhanden sind.

## Patentansprüche

1. Verfahren zur Herstellung eines Faserverbundwerkstoffes, das die folgenden Verfahrensschritte umfasst:
1.1 Zusammenführen von Fasern (1) und Polymer (3);
1.2 Beaufschlagen der Fasern (1) mit thermischer Energie (11) wobei,
1.2.1 die Fasern (1) durch das Energiebeaufschlagen bis auf eine Temperatur erhitzt werden, die über der Temperatur des Polymers (3) liegt; und
1.2.2 die Temperatur, bis auf die die Fasern (1) erhitzt werden, über der Schmelztemperatur des Polymers (3) liegt;
1.3 Weiterverarbeiten der mit Energie beaufschlagten Fasern (1) und des Polymers (3) zu einem Faserverbundwerkstoff (12).

2. Verfahren nach Anspruch 1, bei dem die Temperatur, bis auf die die Fasern (1) erhitzt werden, wenigstens 20% über der Schmelztemperatur des Polymers (3) liegt.

3. Verfahren nach wenigstens einem der vorhergehenden Ansprüche, bei dem das Polymer (1) durch das Enersiebeaufschlagen nicht zersetzt wird, indem die mit Energie beaufschlagten Fasern (1) und das Polymer (3) gekühlt werden.

4. Verfahren nach wenigstens einem der vorhergehenden Ansprüche mit Fasern (1), deren Zersetzungstemperatur über der Zersetzungstemperatur des Polymers (3) liegt.

5. Verfahren nach wenigstens einem der vorhergehenden Ansprüche, bei dem Fasern (1) in Form von Faserhalbzeugen mit dem Polymer (3) zusammengeführt werden.

6. Verfahren nach wenigstens einem der vorhergehenden Ansprüche mit Fasern (1) in Form von Endlosfasern.

7. Verfahren nach wenigstens einem der vorhergehenden Ansprüche mit einem Polymer (3) in Form eines Thermoplasten.

8. Vorrichtung zur Durchführung des Verfahrens nach wenigstens einem der Ansprüche 1 bis 7 mit folgenden Merkmalen:
8.1 Mitteln (2) zum Zusammenführen von Fasern (1) und Polymer (3);
8.2 Mitteln (9) zum Beaufschlagen der Fasern (1) mit thermischer Energie, wobei die Mittel (9) derart ausgebildet sind, dass
8.2.1 die Fasern (1) durch das Energiebeaufschlagen bis auf eine Temperatur erhitzbar sind, die über der Temperatur des Polymers (3) liegt; und
8.2.2 die Temperatur, bis auf die die Fasern (1) erhitzbar sind, über der Schmelztemperatur des Polymers (3) liegt;
8.3 Mitteln (14) zum Weiterverarbeiten der mit Energie beaufschlagten Fasern (1) und des Polymers (3) zu einem Faserverbundwerkstoff (12).

9. Vorrichtung nach Anspruch 8, bei dem die Mittel (9) zum Beaufschlagen der Fasern (1) mit Energie derart ausgebildet sind, dass die Fasern (1) durch das Energiebeaufschlagen in nicht mehr als 0,8 Sekunden bis auf eine Temperatur erhitzbar sind, die wenigstens 20 % über der Schmelztemperatur des Polymers (3) liegt.

## Claims

1. A method for the production of a fibre composite, the method comprising the following steps:
1.1 bringing fibres (1) and polymer (3) together;
1.2 applying thermal energy (11) to the fibres (1), wherein
1.2.1 application of the energy heats the fibres (1) to a temperature which is above the temperature of the polymer (3); and
1.2.2 the temperature to which the fibres (1) are heated is above the melting temperature of the polymer (3);
1.3 further processing the fibres (1) to which energy has been applied and the polymer (3) in order to form a fibre composite (12).

2. The method as claimed in claim 1, in which the temperature to which the fibres (1) are heated is at least 20% higher than the melting temperature of the polymer (3).

3. The method as claimed in at least one of the preceding claims, in which the polymer (1) is not decomposed by application of the energy, in that the fibres (1) to which energy has been applied and the polymer (3) are cooled.

4. The method as claimed in at least one of the preceding claims, having fibres (1) that have a decomposition temperature which is above the decomposition temperature of the polymer (3).

5. The method as claimed in at least one of the preceding claims, in which fibres (1) in the form of semi-finished fibres are brought together with the polymer (3).

6. The method as claimed in at least one of the preceding claims, having fibres (1) in the form of continuous filaments.

7. The method as claimed in at least one of the preceding claims, having a polymer (3) in the form of a thermoplastic.

8. A device for carrying out the method as claimed in at least one of claims 1 to 7, having the following features:
8.1 means (2) for bringing fibres (1) and polymer (3) together;
8.2 means (9) for applying thermal energy to the fibres (1), wherein the means (9) are configured in a manner such that
8.2.1 application of the energy can heat the fibres (1) to a temperature which is above the temperature of the polymer (3); and
8.2.2 the temperature to which the fibres (1) can be heated is above the melting temperature of the polymer (3);
8.3 means (14) for further processing the fibres (1) to which energy has been applied and the polymer (3) in order to form a fibre composite (12).

9. The device as claimed in claim 8, in which the means (9) for applying energy to the fibres (1) are configured in a manner such that the fibres (1) can be heated to a temperature which is at least 20% above the melting temperature of the polymer (3) by application of the energy over no more than 0.8 seconds.

## Revendications

1. Procédé destiné à fabriquer une matière composite renforcée par fibres qui comprend les étapes de procédé suivantes :
1.1 de la réunion de fibres (1) et de polymère (3) ;
1.2 de l'exposition des fibres (1) à de l'énergie thermique (11), lors de laquelle
1.2.1 par l'exposition à de l'énergie, on fait chauffer les fibres (1) jusqu'à une température qui est supérieure à la température du polymère (3) ; et
1.2.2 la température à laquelle on fait chauffer les fibres (1) est supérieure à la température de fusion du polymère (3) ;
1.3 de la mise en oeuvre ultérieure des fibres (1) exposées à de l'énergie et du polymère, en une matière composite renforcée par fibres (12).

2. Procédé selon la revendication 1, lors duquel la température à laquelle on fait chauffer les fibres (1) est supérieure d'au moins 20 %, à la température de fusion du polymère (3).

3. Procédé selon au moins l'une quelconque des revendications précédentes, lors duquel le polymère (1) ne se décompose pas suite à l'exposition à de l'énergie, en ce qu'on fait refroidir les fibres (1) exposées à de l'énergie et le polymère (3).

4. Procédé selon au moins l'une quelconque des revendications précédentes avec des fibres (1) dont la température de décomposition est supérieure à la température de décomposition du polymère (3).

5. Procédé selon au moins l'une quelconque des revendications précédentes, lors duquel on réunit les fibres (1) avec le polymère (3) sous forme de produits semi-finis renforcés en fibres.

6. Procédé selon au moins l'une quelconque des revendications précédentes avec des fibres (1) sous la forme de fibres continues.

7. Procédé selon au moins l'une quelconque des revendications précédentes avec un polymère (3) sous la forme d'une matière thermoplastique.

8. Dispositif destiné à réaliser un procédé selon au moins l'une quelconque des revendications 1 à 7, présentant les caractéristiques suivantes :
8.1 des moyens (2) destinés à réunir des fibres (1} et du polymère (3) ;
8.2 des moyens (9) pour exposer les fibres (1) à de l'énergie thermique, les moyens (9) étant conçus de telle sorte que
8.2.1 par l'exposition à de l'énergie, les fibres (1) puissent être chauffées à une température qui est supérieure à la température du polymère (3) ; et
8.2.2 la température jusqu'à laquelle les fibres (1) peuvent être chauffées soit supérieure à la température de fusion du polymère (3) ;
8.3 des moyens (14) pour la mise en oeuvre ultérieure des fibres (1) exposées à de l'énergie et du polymère (3) en une matière composite renforcée par fibres (12).

9. Dispositif selon la revendication 8, sur lequel les moyens (9) destinés à exposer les fibres (1) à de l'énergie sont conçus de telle sorte que par exposition à de l'énergie, en pas plus de 0,8 secondes, les fibres (1) puissent être chauffées à une température qui est supérieure d'au moins 20 % à la température de fusion du polymère (3).
